# EUROPEAN PATENT SPECIFICATION

(11) **EP 1 602 013 B1**
(45) Date of publication and mention of the grant of the patent: **28.04.2010**
(21) Application number: 04719505.2
(22) Date of filing: 11.03.2004
(51) Int. Cl.: G03H 1/02, G01N 21/47

(54) **HOLOGRAPHIC SENSORS AND THEIR PRODUCTION**
HOLOGRAPHISCHE SENSOREN UND IHRE HERSTELLUNG
DETECTEURS HOLOGRAPHIQUES ET LEUR PRODUCTION

(30) Priority: 11.03.2003 GB 0305590
(43) Date of publication of application: 07.12.2005
(73) Proprietor: Cambridge Enterprise Limited, Trinity Lane Cambridge Cambridgeshire CB2 1TN (GB)
(72) Inventor: DAVIDSON, Colin A. B., Institute of Biotechnology, Cambridge CB2 1QT (GB); BLYTH, Jeffrey, Institute of Biotechnology, Cambridge CB2 1QT (GB); MADRIGAL GONZALEZ, Blanca, Inst. of Biotechnology, Cambridge CB2 1QT (GB)
(74) Representative: Perry, Robert Edward
(86) International application number: PCT/GB2004/000976
(87) International publication number: WO 2004/081676

(56) References cited:
- WO-A-95/26499
- WO-A-99/63408
- US-A- 4 913 990
- US-A1- 2001 053 004
- US-B1- 6 340 540
- PATENT ABSTRACTS OF JAPAN vol. 017, no. 600 (P-1637), 4 November 1993 (1993-11-04) & JP 05 181399 A (CANON INC), 23 July 1993 (1993-07-23)

## Description

### Field of the Invention

This invention relates to the production of a holographic sensor based on a sensitive element which is a hologram.

### Background to the Invention

WO-A-9526499 discloses a sensor based on a volume hologram. This sensor comprises an analyte-sensitive matrix having an optical transducing structure disposed throughout its volume. Typically, such a sensor is made of silver halide particles in gelatin. Because of this physical structure, the optical signal generated by the sensor is very sensitive to volume changes or structural rearrangements taking place in the matrix, as a result of interaction or reaction with the analyte.

An alternative method of production of a holographic sensor is disclosed in WO-A-9963408. A sequential treatment technique is used, wherein the polymer film is made first and sensitive silver halide particles are added subsequently. These particles are introduced by diffusing soluble salts into the polymer matrix where they react to form an insoluble light-sensitive precipitate. The holographic image is then recorded.

Ley et al, Meas. Sci. Technol. (1997) 8:997-1000, discloses the production of a polymer hydrogel, to be used as a sensor in an aqueous environment. An interference pattern was recorded after swelling the hydrogel, the swelling being caused by an aqueous solution of further monomer, cross-linking agent and initiator. The diffractive characteristics of the resultant holographic grating depend on the concentration of added solvate.

### Summary of the Invention

The present invention is based on the realisation that a volume hologram can be formed in a polymer which is not necessarily swollen, in which a holographic grating is sensitive to swelling, and which does not necessarily contain silver halide particles.

According to one aspect of this invention, a sensor comprises a medium and, disposed throughout the volume thereof, a holographic element whose fringes are defined by different degrees of swellability in a liquid to be tested, wherein the different degrees of swellability correspond to different degrees of cross-linking of a polymeric medium. The effect may be seen on swelling in a liquid to be tested, or on contraction.

According to another aspect of this invention, a sensor comprising a medium and a hologram disposed throughout the volume of the medium, is produced by a method which comprises the recording of a holographic image by selective (de)polymerisation of the medium, wherein the medium is in a swellable state during the recording. Thus, polymerisation can be used to increase the bond density in certain areas, e.g. by cross-linking, or an existing polymer can have certain bonds, in order to give a product that is differentially swellable and thereby provide a grating. If selective cross-linking is used, then the cross-linking preferably takes place in the presence of a free radical inhibitor.

### Description of Preferred Embodiments

A holographic sensor of the type used in the present invention generally comprises a holographic element which comprises a holographic support medium and a hologram disposed throughout the volume of the medium. Typically, when used as a sensor, the support medium interacts with an analyte, resulting in a variation of a physical property of the medium. This variation induces a change in an optical characteristic of the holographic element, such as its polarisability, reflectance, refractance or absorbence. If any change occurs whilst the hologram is being replayed by incident broad band, non-ionising electromagnetic radiation, then a colour, intensity or other change may be observed.

A holographic sensor may be used for detection of a variety of analytes, simply by modifying the composition of the support medium. The medium comprises a polymer matrix, the composition of which is preferably optimised to obtain a high quality film, i.e. a film having a uniform matrix in which holographic fringes can be formed. The polymer matrix is preferably formed by the copolymerisation of acrylamide and/or methacrylate-derived comonomers. In particular, the monomer HEMA (hydroxyethyl methacrylate) is readily polymerisable and cross-linkable. PolyHEMA is a versatile support material since it is swellable, hydrophilic and widely biocompatible.

Other examples of holographic support media are gelatin, K-carageenan, agar, agarose, polyvinyl alcohol (PVA), sol-gels (as broadly classified), hydrogels (as broadly classified) and acrylates. Gelatin is of course a standard matrix material for supporting photosensitive species such as silver halide grains, although such species are not required, in the present invention. Gelatin can also be photo-cross-linked by Cr (III) ions, between carboxyl groups on gel strands.

A preferred procedure for producing a sensor of the invention involves two polymerisation steps, the first forming a polymeric matrix and the second forming, in selected parts of the matrix, a different degree or type of polymerisation. This second step may involve further cross-linking of the matrix, or the formation of an interpenetrating polymer. This second step may not of itself form a distinct holographic grating, but a grating will be evident on swelling (or contraction) of the resultant material. For example, this method enables volume holograms to be produced which replay in the 400-800 nm region when used as a sensor in a liquid which swells the hologram.

The grating may be observed on swelling in a liquid of lower refractive index than the unswollen matrix (which will usually be the case). If desired, a material of high refractive index may be involved, e.g. a salt or compound of any metal which forms a sufficiently insoluble polyacrylate. Lead, calcium, strontium, zinc and also trivalent metal (e.g. AI) acrylates may work. Such compounds preferably have high atomic weights in order to achieve the higher refractive index values and thereby enhance the diffraction efficiency. The medium in which the hologram is formed is a polymer, and a sensor of the invention essentially comprises two polymers distinguished in type or, conveniently, in degree of cross-linking (one of which degrees may be zero). These polymers are relatively "soft" and "hard". Either or each such polymer may include functional groups, e.g. that are intended to react with an analyte.

By way of illustration, a polymer layer may be formed on a support such as a slide. This may be carried out using an incoherent UV light source, by a procedure essentially the same as is used for a conventional silver-based hologram.

The polymerisation is preferably conducted using a free radical initiator. Many such materials are known, including 2,2-dimethoxy-2-phenylacetophenone, Daracur 1173, Irgacure 2959 or Quantacure WB 4736.

Then, the polymer is immersed in a swelling liquid which, by way of example, contains a high proportion of suitable cross-linker as well as an appropriate free-radical photo-initiator and, if desired, volatile solvent needed to aid the diffusion into the polymer layer. The cross-linker may be the same as or different from that used to make the polymer layer.

After sufficient time for substantially complete absorption of the swelling liquid, excess liquid may be removed from the support. The swollen polymer is then allowed or caused to contract, fully or partially; for example, the polymer is blown with warm air, to evaporate the volatile solvent. It may be desirable that some moisture is retained in the polymer layer, to enable free radicals to be generated in a second photopolymerisation step. Therefore, after the contraction, it is convenient to leave the slide in a high humidity chamber, e.g. at 80% R.H., to insure sufficient moisture content for the next polymerisation step. However, the degree of swelling due to moisture uptake should be nowhere near as high as when the finished hologram is immersed in a working liquid (normally an aqueous buffer). The polymer side of the slide can have its equilibrated moisture content protected by a cover layer, e.g. a thin slide of transparent polished silica, so that the polymer is sandwiched .

The second polymerisation step is preferably conducted in the presence of an inhibitor (scavenger) of free radicals; this may be necessary to ensure that a satisfactory fringe structure is attained. Although ambient oxygen can act as an inhibitor, it may lead to inconsistent results as its concentration cannot be accurately controlled. Instead, it is preferred that the second polymerisation step takes place in the presence of an inhibitor such as hydroquinone or ascorbic acid (vitamin C), and, if oxygen is present, under limited oxygen conditions. If oxygen is present during the second polymerisation step, then it is desirable to control its presence since it can also lengthen the necessary exposure time in the following stage. This may be achieved by using a silica cover layer as described above. Satisfactory results can, however, still be achieved without the use of such a plate, the value of the plate being somewhat dependant on the thickness of the polymer film.

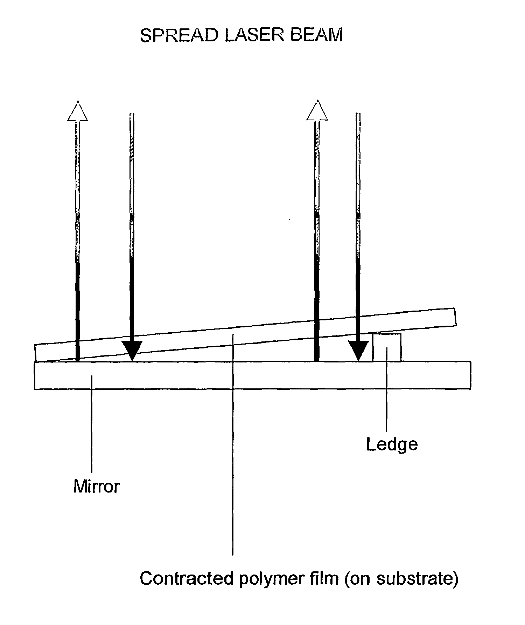

The slide sandwich may then be positioned with its polymer side down in a trough for exposure, as shown in Fig. 1. Since the duration of exposure may be a number of seconds, it is desirable for the sample to be left to equilibrate in position for several minutes before exposure, in order to facilitate the formation of a coherent holographic fringe structure.

Coherent light is preferably used for the exposure to form the hologram. A UV laser is particularly preferred and, in this case, it is appropriate to use a cover layer of transparent silica rather than glass since glass causes much greater light loss.

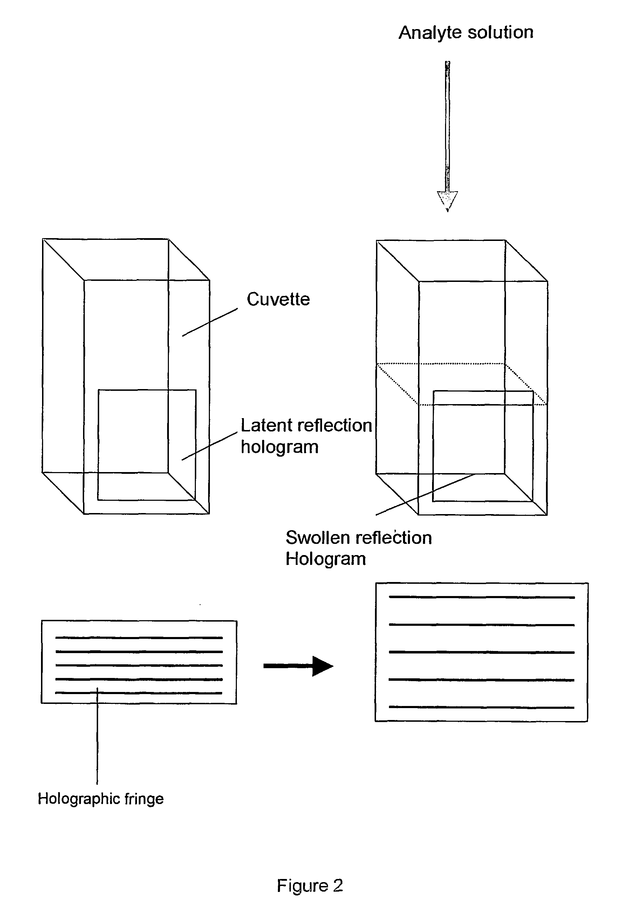

After the exposure is made, there will be a fringe structure (Fig. 2) made with the following character. Dark fringes (nodes) will be made of the original, relatively lightly cross-linked polymer, and light fringes (anti-nodes) will be the original polymer now in effect heavily cross-linked by the second polymerisation step. The second polymerisation may or may not result in significant chemical grafting of the second onto the first polymer, i.e. true additional cross-linking of the first polymer, but in either case the strong cross-linked network of the second polymer will cause the antinode fringes to be restricted from swelling. After exposure, remaining absorbed monomer material is removed, e.g. using water or an alcoholic solution. As an alternative or in addition to cross-linking the original polymer, the second polymerisation step may be performed using, for example, an interpenetrating polymer.

The difference in refractive index between the light fringes and dark fringes may be small, after the exposure in the contracted polymers. A key aspect of the present invention is that the treatment described above enables the dark fringes to swell in an aqueous or other test liquid, since they have not been heavily cross-linked, and thus the refractive index (RI) of the dark fringe will move toward the value of the RI of the test liquid as it absorbs it. Typically, in the case of aqueous buffer solution, the dark fringe RI for visible light falls from a value of around 1.5 to below 1.4, whereas the heavily cross-linked light fringe has an RI value still nearer to 1.5. Therefore this treatment has much increased the fringe contrast in the test liquid and the consequent diffraction efficiency. This swelling has also increased the overall fringe spacing; consequently, when the holographic image is reconstructed under a white light source then the new fringe spacing selects out a longer wavelength from the spectrum than the original laser wavelength used to construct the fringes; see Fig. 2.

The difference in fringe spacing between that of recording and that of replay in white light may typically result in a difference in wavelength of around 300nm. Therefore, if the recording is made using a "frequency doubled" YAG laser at 532nm, the replay wavelength would be out of the human vision range. By recording the grating using a "frequency tripled "YAG at 355nm, this puts the replay wavelength mostly in the human vision range.

The following Examples illustrate the invention. In the Examples, pairs of formulations, are listed. The first formulation (A) makes up the polymer which can contain the functional groups which will result in a "smart polymer". This first polymerisation is carried out under an incoherent UV light source. This formulation is "paired" with another formulation (XL) for the second polymerisation that contains monomer solutions which will give a highly cross-linked polymer (P2) after XL has soaked into the first polymer and then been exposed to 355nm laser light. The formulations of Examples 6 and 7 comprise an inhibitor of free radical polymerisation, namely hydroquinone and ascorbic acid respectively.

The following abbreviations are used:

| | | |
|---|---|---|
| DMPA | = | 2,2-dimethoxy-2-phenylacetophenone |
| HEMA | = | hydroxyethyl methacrylate |
| MAA | = | methacrylic acid |
| EDMA | = | ethylene dimethacrylate |
| DMAEM | = | 2-(dimethylamino)ethyl methacrylate |
| DHEBA | = | dihydroxyethylenebisacrylamide |
| MBA | = | methylenebisacrylamide |
| BAP | = | bis (acryloyl) piperazine |

### Example 1

A1

| | |
|---|---|
| 2-propanol | 4.0 ml |
| DMPA | 25 mg |
| HEMA | 3.65 ml (30mmole) |
| MAA | 0.84 ml (10 mmole) |
| EDMA | 0.18 (0.5 mmole) |

XL1

| | |
|---|---|
| DMPA | 25 mg |
| Methanol | 7.0 ml |
| EDMA | 2.0ml |
| HEMA | 0.20 ml |
| Ethanediol | 0.020ml |
| Deionised water | 0.020 ml |

### Example 2

A2

| | |
|---|---|
| DMPA | 20 mg |
| 2-propanol | 3.0 ml |
| HEMA | 2.43 ml |
| EDMA | 0.21 ml |
| DMAEM | 0.37 ml |

XL2 is the same as XL1.

### Example 3

A3

| | |
|---|---|
| DMPA | 15 mg |
| Methanol | 0.20 ml |
| Deionised water | 4.0 ml |
| Acrylamide | 2.0 g |
| Methacrylamide | 1.0 g |
| DHEBA | 0.126 g |
| Itaconic acid | 40 mg |

XL3

| | |
|---|---|
| Methanol | 10 ml |
| DMPA | 15 mg |
| Deionised water | 9 ml |
| Ethanediol | 1.0 ml |
| MBA | 1.2 g |

(The solution requires warming to ∼50 ° C to dissolve the latter)

### Example 4

A4 is as in any of Examples 1 to 3. XL4, using the cross-linker BAP is:

| | |
|---|---|
| BAP | 2.5 g |
| Irgacure 2959 | 0.05 g |
| Methanol | 2.5 ml |
| Deionised water | 4.0 ml |
| Ethanediol | 2.0 ml |

This works well after soaking into any of the acrylamide polymers (A) of Example 1 to 3.

### Example 5

A5 is as in any of Examples 1 to 3. XL5, with a high refractive index heavy metal salt, is:

| | |
|---|---|
| Irgacure 2959 | 15 mg |
| Methanol | 1.0 ml |
| Acrylamide | 0.50 g |
| Barium diacrylate (1.5 M in water) | 4.0 ml |

The resulting barium-containing composition worked in a holographic grating. After time, in stirred deionised water, the hologram disappeared because it apparently lost Ba.

### Example 6

A6 is the same as A1 or A2. XL6 is:

| | |
|---|---|
| DMPA | 10 mg |
| Irgacure 2959 | 10 mg |
| Methanol | 7.0 ml |
| EDMA | 2.0 ml |
| HEMA | 0.5 ml |
| Triethanolamine | 0.02 ml |
| Deionised water | 0.02 ml |
| Hydroquinone solution (2%, in methanol) | 0.50 ml |

### Example 7

A7 is the same as A3. XL7 is:

| | |
|---|---|
| DMPA | 5 mg |
| Irgacure 2959 | 5 mg |
| Methanol | 1 ml |
| BAP | 0.4 g |
| Diethylene glycol | 0.50 ml |

The solution is then warmed and shaken until clear, the following then added:

| | |
|---|---|
| Deionised water | 4.0 ml |
| Triethanolamine | 0.04 ml |
| Ascorbic acid (1 % w/v, in water) | 0.20 ml |

## Claims

1. A sensor comprising a medium and, disposed throughout the volume thereof, a holographic element whose fringes are defined by different degrees of swellability in a liquid to be tested, wherein the different degrees of swellability correspond to different degrees of cross-linking of a polymeric medium.

2. A method for the production of a sensor according to claim 1, which comprises the recording of a holographic image by selective (de)polymerisation of the medium, wherein the medium is in a swellable state during the recording.

3. A method according to claim 2, which comprises selective cross-linking of an uncross-linked or substantially uniformly cross-linked polymer.

4. A method according to claim 3, which comprises introducing a cross-linking agent in a volatile solvent that causes the polymer to swell, and then removing the solvent prior to the selective (de)polymerisation.

5. A method according to claim 3 or claim 4, wherein cross-linking takes place in the presence of an inhibitor of free radical polymerisation.

6. A method according to claim 5, wherein the inhibitor is oxygen, hydroquinone or ascorbic acid.

## Patentansprüche

1. Sensor, umfassend ein Medium und, durch das ganze Volumen desselben hindurch angeordnet, ein holographisches Element, dessen Ränder durch verschiedene Grade der Quellbarkeit in einer zu prüfenden Flüssigkeit definiert werden, wobei die verschiedenen Quellbarkeitsgrade den verschiedenen Vernetzungsgraden eines polymeren Mediums entsprechen.

2. Methode für die Herstellung eines Sensors nach Anspruch 1, die das Aufzeichnen eines holographischen Bilds durch selektive (De)polymerisation des Mediums umfasst, wobei das Medium sich während der Aufzeichnung in einem quellbaren Zustand befindet.

3. Methode nach Anspruch 2, die das selektive Vernetzen eines unvernetzten oder im Wesentlichen gleichförmig vernetzten Polymers umfasst.

4. Methode nach Anspruch 3, die das Einführen eines Vernetzungsmittels in ein flüchtiges Lösungsmittel, das das Polymer zum Quellen bringt, und daraufhin das Entfernen des Lösungsmittel vor der selektiven (De)polymerisation umfasst.

5. Methode nach Anspruch 3 oder Anspruch 4, wobei das Vernetzen in Gegenwart eines Inhibitors der freien Radikalpolymerisation stattfindet.

6. Methode nach Anspruch 5, wobei der Inhibitor Sauerstoff, Hydrochinon oder Ascorbinsäure ist.

## Revendications

1. Capteur comprenant un milieu et, disposé dans tout le volume de celui-ci, un élément holographique, dont les franges sont définies par différents degrés de dilatabilité dans un liquide à tester, dans lequel les différents degrés de dilatabilité correspondent à différents degrés de réticulation d'un milieu polymère.

2. Procédé pour la production d'un capteur selon la revendication 1, qui comprend l'enregistrement d'une image holographique par (dé)polymérisation sélective du milieu, dans lequel le milieu est à un état dilatable pendant l'enregistrement.

3. Procédé selon la revendication 2, qui comprend une réticulation sélective d'un polymère non réticulé ou réticulé d'une manière sensiblement uniforme.

4. Procédé selon la revendication 3, qui comprend l'introduction d'un réticuleur dans un solvant volatil qui fait que le polymère se dilate et l'élimination du solvant avant la (dé)polymérisation sélective.

5. Procédé selon la revendication 3 ou la revendication 4, dans lequel la réticulation a lieu en présence d'un inhibiteur de polymérisation de radicaux libres.

6. Procédé selon la revendication 5, dans lequel l'inhibiteur est l'oxygène, l'hydroquinone ou l'acide ascorbique.
